# EUROPEAN PATENT APPLICATION

(11) **EP 3 251 496 A1**
(43) Date of publication of application: **06.12.2017**
(21) Application number: 17172537.7
(22) Date of filing: 23.05.2017
(51) Int. Cl.: A01G 9/10

(54) **COMPACTED GROWTH SUBSTRATE FOR PLANTS**

(30) Priority: 30.05.2016 WO PCT/EP2016/062168
(71) Applicant: Damgro B.V., 2671 MC Naaldwijk (NL); Multi Plant Groente Saailing Kwekery Pty, 0250 Brits (ZA)
(72) Inventor: Grootscholten, Johannes Petrus Wilhelmus Maria, 2671 MC Naaldwijk (NL); Du Toit, Len Ignatius, 0250 Brits (ZA)
(74) Representative: van Kooij, Adriaan

(57) **Abstract**

The present invention relates to compacted, compressed or pressed plant growth substrates and to methods for obtaining the present compacted plant growth substrates. Specifically the present invention relates to methods for providing a compacted plant growth substrate block comprising: a) washing composted organic substances by mixing composted organic substances with water for providing a slurry; b) sieving and/or sedimenting the slurry thereby separating the slurry into a semi-solid and liquid fraction; c) drying the semi-solid fraction obtained in step (b); d) mixing the dried semi-solid fraction with a carrier for providing a growth substrate; e) compressing said growth substrate into blocks, thereby providing plant growth substrate blocks capable of providing a growth substrate for one or more plants, preferably seedlings and/ or young plants and/or plant cuttings.

## Description

The present invention relates to compacted, compressed or pressed plant growth substrates and to methods for obtaining the present compacted plant growth substrates.

Presently, compacted, compressed or pressed plant growth substrates blocks capable of providing a growth substrate for one or more plants are made of pressed blocks of peat and especially black peat.

Peat, or turf, is an accumulation of partially decayed vegetation or organic matter that is unique to natural areas called peatlands or mires. Peatlands, also known as mires are a major source of peat. Peat can be harvested as a source of fuel or can be used in agriculture and horticulture as a plant growth substrate especially in the form pressed blocks being the standard growth substrate for a range of vegetable seedlings.

Peat, although organic in origin, is not generally regarded as a renewable source as its extraction rate in industrialized countries far exceeds its slow regrowth rate of generally 1 mm per year. Accordingly, there is a need in the art of agriculture and horticulture to provide an alternative for pressed peat blocks. Present alternatives for pressed peat blocks, such as Rockwool blocks cannot be used in, for example, the organic certified vegetable production systems or do not provide adequate growth characteristics, especially for seedlings or young plants.

Considering the above need in the art it is an object, amongst other object, of the present invention to provide an alternative for pressed peat blocks. A requirement of such alternative is that, after compression, the pressed blocks will hold form and do not crumble. Formulated differently, with respect to compacted plant growth substrates it is a requirement that the pressed substrates themselves posses sufficient structural integrity to maintain shape during storage and use without the use of additional means such as a container or an enforced outer layer of, for example, plastic.

The above object, amongst other objects, is met by the present invention as outlined in the appended claims.

Specifically, the above object, amongst other objects, is, according to a first aspect of the present invention, met by a method for providing a compacted plant growth substrate comprising:
a) washing composted organic substances by mixing composted organic substances with water for providing a slurry;
b) sieving and/or sedimenting the slurry thereby separating the slurry into a semi-solid and liquid fraction;
c) drying the semi-solid fraction obtained in step (b);
d) mixing the dried semi-solid fraction with a carrier for providing a growth substrate;
e) compressing said growth substrate into blocks thereby providing plant growth substrate blocks capable of providing a growth substrate for one or more plants, preferably seedlings and/ or young plants and/or plant cuttings, said blocks, preferably, have a water content between 10% to 90% wt., more preferably between 50% to 80% wt.

The present inventors have found that present steps (a) and (b), i.e. washing organic substances and subsequently isolating the semi-solid fraction of this wash using sieving or sedimenting is essential for obtaining a compacted plant growth substrate with sufficient structural integrity. Without wishing to be limited to any underlying mechanism, it is believed that the wash step allows for small particulate present in the organic substance to dissolve or suspend in the liquid phase. This suspended or dissolved particulate is subsequently removed from the slurry and the remaining semi-solid fraction is compacted into a plant growth substrate. Surprisingly, the present inventors have found that if the small particulate is not removed, it is not possible to provide a plant growth substrate with sufficient structural integrity, i.e., the plant growth substrate obtained will readily disintegrate or crumble during storage, transport and/or use.

According to the present invention, the present carrier added in step (c) of the present method is preferably selected from the group consisting of coco coir, coconut waste, bark, peat, husk, saw dust, wood chips and combinations thereof and most preferably coco coir. In contrast to traditional peat, these carriers provide a renewable source for the production of plant growth substrates. According a preferred embodiment, the present carrier is coco coir. Coir is a natural fiber extracted from the husk of coconut and used in products such as floor mats, doormats, brushes, mattresses, etc. Coir is the fibrous material found between the hard, internal shell and the outer coat of a coconut. The present carrier is preferably added in volume ratio dried semi-solid fraction to carrier of between 0.05 to 9.

According to the present invention, the present organic substance is preferably selected from the group consisting of composted organic material, organic waste streams, municipal waste steams, waste streams from food processing industry or manure.

The present washed slurry of step (a) is preferably sieved using a sieve mesh in step between 0.5 to 3 millimeters, preferably between 0.7 to 1 millimeters, more preferably between 0.8 to 0.9 millimeters. By using the sieve meshes indicated, sufficient removal of small particulate is ensured resulting in improved stability of the present compacted plant growth substrate.

With respect to wash step (a), the water to organic substance volume ratio is preferably between 0.25 to 4, preferably between 0.5 to 2, more preferably between 0.8 and 1.2; most preferably substantially 1 thereby ensuring optimal suspending or dissolving of small particulate into the liquid phase.

According to a preferred embodiment of the present invention, further plant nutrients and/or plant growth promoting agents can be added before the compressing or compacting step (e).

Considering the benefits of the compacted plant growth substrates produced by the methods according to the present invention, the present invention also relates to compacted plant growth substrate blocks obtainable, or obtained, by the present methods and to compacted plant growth substrate block capable of providing a growth substrate for one or more plants, preferably seedling and/or young plants and/or plant cuttings, comprised of dried sieved and/or sedimented slurry of organic substances, preferably organic material, organic waste streams, municipal waste steams, waste streams from food processing industry or manure, and a carrier having a water content of 50% to 80% (wt.).

The present compacted plant growth substrate blocks preferably comprise a carrier selected from the group consisting of coco coir, coconut waste, bark, peat, husk, saw dust, wood chips and combinations thereof.

The present invention additionally relates to the use of a semi-solid fraction of dried sieved and/or sedimented organic substance for providing a compacted plant growth substrate block capable of providing a growth substrate for one or more plants, preferably seedlings and/or young plants and/or plant cuttings wherein, preferably the organic substance is selected from the group consisting of composted organic material, organic waste stream and manure.

The present invention will be further detailed in the Example below.

### Example

Organic substances from several sources were obtained and were either pretreated with a wash step and sieve step or an omission of these steps before adding a carrier and a compression of the mixture obtained. Specifically, green manure, i.e. manure created by leaving uprooted or sown crop parts to wither on a field, kraal manure, i.e. cattle manure commonly used in Swaziland and champost, i.e. a waste stream champignon cultivation were used. The organic substances were washed by the addition of between 960 to 1200 liter water 1200 liter organic substances depending on the porosity of the organic substance.

Subsequently, the slurry obtained was sieved through a sieve with a sieve mesh of 0.8 to 0.9 millimeter and approximately 50% coco coir was added to the semi-solid obtained. Finally, the mixture obtained was subjected to compressing into blocks. As reference, 50% coco coir was also added to the starting green manure, kraal manure and champost and the mixture obtained was subjected to compressing into blocks.

The blocks were subsequently analyzed for their structural integrity by visible inspection the results of which are summarized below in **Table 1**.

**Table 1: structural integrity of the plant growth substrates obtained after compressing:**

| **Organic substance** | **Washed and sieved before compressing** | **Not washed and sieved before compressing** |
|---|---|---|
| Green manure | Blocks obtained hold form and do not crumble | Blocks crumble and disintegrate |
| Kraal manure | Blocks obtained hold form and do not crumble | Blocks crumble and disintegrate |
| Champost | Blocks obtained hold form and do not crumble | Blocks crumble and disintegrate |

As can be clearly seen in **Table 1**, washing and sieving the organic substances provides structural integrity to the resulting plant growth substrate. As compared to the starting organic substance, the washed and sieved organic substance was remarkably more sticky presumably accounting for the structural integrity of the resulting compacted plant growth substrate blocks.

## Claims

1. Method for providing a compacted plant growth substrate block comprising:
a) washing composted organic substances by mixing composted organic substances with water for providing a slurry;
b) sieving and/or sedimenting the slurry thereby separating the slurry into a semi-solid and liquid fraction;
c) drying the semi-solid fraction obtained in step (b);
d) mixing the dried semi-solid fraction with a carrier for providing a growth substrate;
e) compressing said growth substrate into blocks thereby providing plant growth substrate blocks capable of providing a growth substrate for one or more plants, preferably seedlings and/ or young plants and/or plant cuttings, said blocks, preferably, have a water content between 10% to 90% wt., more preferably between 50% to 80% wt.

2. Method according to claim 1, wherein said carrier is selected from the group consisting of coco coir, coconut waste, bark, peat, husk, saw dust, wood chips and combinations thereof.

3. Method according to claim 1 or claim 2, wherein said organic substance is selected from the group consisting of organic material, organic waste streams, municipal waste steams, waste streams from food processing industry and manure.

4. Method according to any one of claims 1 to 3, wherein the sieve mesh in step (b) is between 0.5 to 3 millimeters, preferably between 0.7 to 1 millimeters, more preferably between 0.8 to 0.9 millimeters.

5. Method according to any one of the claims 1 to 4, wherein the water to compost volume ratio in step (a) is between 0.25 to 4, preferably between 0.5 to 2, more preferably between 0.8 and 1.2; most preferably substantially 1.

6. Method according to any one of the claims 1 to 5, wherein the volume ratio dried semi-solid fraction to carrier is between 0.05 to 9.

7. Method according to any one of the claims 1 to 6, wherein plant nutrients and/or plant growth promoting agents are added before step (e).

8. Compacted plant growth substrate blocks obtainable by a method according to any one of the claims 1 to 7.

9. Compacted plant growth substrate block capable of providing a growth substrate for one or more plants, preferably seedling and/or young plants and/or plant cuttings, comprised of dried sieved and/or sedimented slurry of organic substances and a carrier having a water content of 50% to 80% (wt.).

10. Compacted plant growth substrate block according to claim 9, wherein said carrier is selected from the group consisting of coco coir, coconut waste, bark, peat, husk, saw dust, wood chips and combinations thereof.

11. Use of a semi-solid fraction of dried sieved and/or sedimented organic substance for providing a compacted plant growth substrate block capable of providing a growth substrate for one or more plants, preferably seedlings and/or young plants and/or plant cuttings.

12. Use according to claim 11, wherein said organic substance is selected from the group consisting of composted organic material, organic waste stream and manure
